# EUROPÄISCHE PATENTANMELDUNG

(11) **EP 2 500 145 A2**
(43) Veröffentlichungstag der Anmeldung: **19.09.2012**
(21) Anmeldenummer: 12152119.9
(22) Anmeldetag: 23.01.2012
(51) Int. Cl.: B25F 5/00, H02K 3/00

(54) **Handwerkzeugmaschine**

(30) Priorität: 16.03.2011 DE 102011005593
(71) Anmelder: HILTI Aktiengesellschaft, 9494 Schaan (LI)
(72) Erfinder: Burger, Helmut, 86931 Prittriching (DE)

(57) **Zusammenfassung**

Eine Handwerkzeugmaschine hat ein Maschinengehäuse, in welchem ein Elektromotor mit einer um eine Motorachse verschwenkbaren Bürstenhalter angeordnet ist. Ein Umpolschalter der Handwerkzeugmaschine hat gegenüber dem Maschinengehäuse unbewegliche erste Kontakteinrichtungen und auf dem Bürstenhalter angeordnete zweite Kontakteinrichtungen. Ein Bedienelement ist durch einen Anwender zwischen zwei Stellung verstellbar, wodurch der Bürstenhalter zum Wechseln einer Laufrichtung des Elektromotors verschwenkt wird. Wenigstens eine der ersten Kontakteinrichtungen weist ein erstes Metallband und eine, vorzugsweise separate, erste Feder auf. Ein Abschnitt des ersten Metallbandes weist auf einer Seite eine erste Kontaktfläche zum Kontaktieren einer der zweiten Kontakteinrichtung auf und die erste Feder ist gegen eine der ersten Kontaktfläche gegenüberliegende Seite des Abschnitts des ersten Metallbandes in Richtung zu der zweiten Kontakteinrichtung vorgespannt. Wenigstens eine der zweiten Kontakteinrichtungen weist ein zweites Metallband und eine zweite Feder auf, wobei ein Abschnitt des zweiten Metallbandes auf einer Seite eine zweite Kontaktfläche zum Kontaktieren einer der ersten Kontakteinrichtung aufweist und die zweite Feder gegen eine der zweiten Kontaktfläche gegenüberliegende Seite des Abschnitts des zweiten Metallbandes in Richtung zu der ersten Kontakteinrichtung vorgespannt ist.

## Beschreibung

### GEBIET DER ERFINDUNG

Die vorliegende Erfindung betrifft eine Handwerkzeugmaschine für ein rotierendes Werkzeug. Eine Drehrichtung des Werkzeugs kann durch einen Bedienelement an der Handwerkzeugmaschine eingestellt werden.

### OFFENBARUNG DER ERFINDUNG

Die erfindungsgemäße Handwerkzeugmaschine hat ein Maschinengehäuse, in welchem ein Elektromotor mit einer um eine Motorachse verschwenkbaren Bürstenhalter angeordnet ist. Ein Umpolschalter der Handwerkzeugmaschine hat gegenüber dem Maschinengehäuse unbewegliche erste Kontakteinrichtungen und auf dem Bürstenhalter angeordnete zweite Kontakteinrichtungen. Ein Bedienelement ist durch einen Anwender zwischen zwei Stellung verstellbar, wodurch der Bürstenhalter zum Wechseln einer Laufrichtung des Elektromotors verschwenkt wird. Es sind beispielsweise zwei ortsfeste, erste Kontakteinrichtungen und drei oder mehr verschwenkbare, zweite Kontakteinrichtungen vorgesehen. Je nach Stellung des Bürstenhalters berühren die ersten Kontakteinrichtungen andere der zweiten Kontakteinrichtungen. Wenigstens eine der ersten Kontakteinrichtungen weist ein erstes Metallband und eine, vorzugsweise separate, erste Feder auf. Ein Abschnitt des ersten Metallbandes weist auf einer Seite eine erste Kontaktfläche zum Kontaktieren einer der zweiten Kontakteinrichtung auf und die erste Feder ist gegen eine der ersten Kontaktfläche gegenüberliegende Seite des Abschnitts des ersten Metallbandes in Richtung zu der zweiten Kontakteinrichtung vorgespannt. Wenigstens eine der zweiten Kontakteinrichtungen weist ein zweites Metallband und eine zweite Feder auf, wobei ein Abschnitt des zweiten Metallbandes auf einer Seite eine zweite Kontaktfläche zum Kontaktieren einer der ersten Kontakteinrichtung aufweist und die zweite Feder gegen eine der zweiten Kontaktfläche gegenüberliegende Seite des Abschnitts des zweiten Metallbandes in Richtung zu der ersten Kontakteinrichtung vorgespannt ist. Das Metallband bildet den elektrische Kontakt und Teil einer Umverdrahtung, die einen Strom dem Elektromotor zuführt. Das Metallband ist vorzugsweise aus Kupfer. Die Feder, welche nicht an der Umverdrahtung beteiligt ist, kann optimal für eine Federkraft ausgelegt sein.

Eine Ausgestaltung sieht vor, dass ein anderer Abschnitt des ersten Metallbands dauerhaft mit einer Bürsteneinrichtung auf dem Bürstenhalter verbunden ist und/oder ein anderer Abschnitt des zweiten Metallbands dauerhaft mit einer Stromversorgung der Handwerkzeugmaschine verbunden ist. Eine Litze kann auf den anderen Abschnitt des ersten Metallbands und/oder den anderen Abschnitt des zweiten Metallbands aufgelötet, aufgeschweißt oder angeklemmt sein. Eine Stromführung erfolgt durch den einen und den weiteren Abschnitt in eine Litze.

Eine Ausgestaltung sieht vor, dass die erste Feder und/oder die zweite Feder stromfrei sind, d.h. durch die Federn kein Strom fließt. Die Federn kontaktieren das Metallband nur mit einem Ende, ein anderes Ende der Federn berührt vorzugsweise ein von dem Metallband isolierten Bereich des Bürstenträgers. Die erste Feder kann zwischen die die der ersten Kontaktfläche gegenüberliegende Seite des ersten Metallbandes und einen ersten elektrisch isolierenden Träger eingespannt sein und/oder die zweite Feder kann zwischen die die der zweiten Kontaktfläche gegenüberliegende Seite des zweiten Metallbandes und einen zweiten elektrisch isolierenden Träger eingespannt sein.

Eine Ausgestaltung sieht vor, dass das erste Metallband in einer ersten Gleitführung parallel zu der Richtung zu der zweiten Kontakteinrichtung geführt ist und/oder das zweite Metallband in einer zweiten Gleitführung parallel zu der Richtung zu der ersten Kontakteinrichtung geführt ist. Ein in der ersten Gleitführung angeordneter Abschnitt des ersten Metallbandes kann zu dem Abschnitt mit der ersten Kontaktfläche angewinkelt sein und/oder ein in der zweiten Gleitführung angeordneter Abschnitt des zweiten Metallbandes kann zu dem Abschnitt mit der zweiten Kontaktfläche angewinkelt sein.

Eine Ausgestaltung sieht vor, dass das erste Metallband zwischen dem Abschnitt mit der ersten Kontaktfläche und einem Abschnitt, an dem eine Litze aufgelötet, aufgeschweißt oder angeklemmt ist, und einen weiteren Abschnitt aufweist, der in der ersten Gleitführung angeordnet ist, und/oder das zweite Metallband zwischen dem Abschnitt mit der zweiten Kontaktfläche und einem Abschnitt, an dem eine Litze aufgelötet, aufgeschweißt oder angeklemmt ist, und einen weiteren Abschnitt aufweist, der in der zweiten Gleitführung angeordnet ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Handwerkzeugmaschine,
- Fig. 2: eine Bürstenplatte,
- Fig. 3, 4 und 5: einen Motor mit der Bürstenplatte in verschiedenen Längsschnitten;
- Fig. 6 und 7: Detailansichten der Bürstenplatte;
- Fig. 8: einen weiteren Motor.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

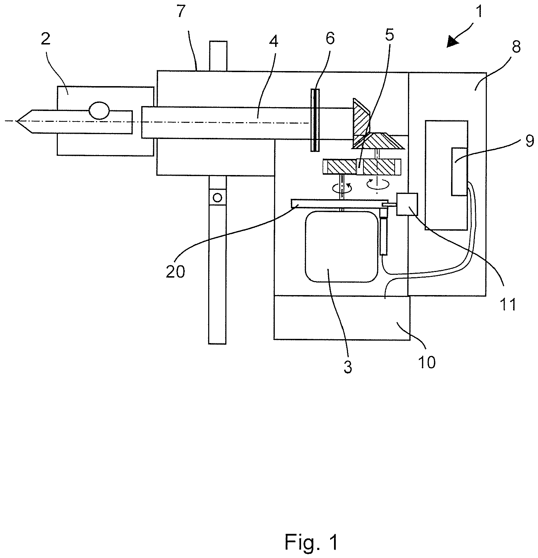

Fig. 1 zeigt schematisch einen Bohrhammer 1 als beispielhafte Handwerkzeugmaschine. Der Bohrhammer 1 hat eine Werkzeugaufnahme 2, in welcher ein Bohrmeißel oder ein anderes drehendes Werkzeug, z.B. ein Bohrer, eingesetzt werden kann. Ein Elektromotor **3** treibt die Werkzeugaufnahme **2** und dreht somit das Werkzeug um seine Achse. Ein Antriebsstrang **4** zwischen dem Elektromotor **3** und der Werkzeugaufnahme **2** kann unter Anderem ein Getriebe **5** und eine Kupplung **6** enthalten. Der Elektromotor 3 und der Antriebsstrang **4** sind in einem Maschinengehäuse **7** angeordnet, welches ein Anwender mittels eines Handgriffs **8** führen kann. Ein Hauptschalter **9** ermöglicht dem Anwender den Bohrhammer **1** den Elektromotor **3** ein- und auszuschalten. Der Hauptschalter **9** kann eine Stromzufuhr von einer Stromquelle **10,** z.B. einem Akku oder einem Netzanschluss, zu dem Elektromotor **3** unterbrechen oder schließen. Einen Drehsinn des Elektromotors **3** kann der Anwender mittels eines mechanischen Stellmechanismus **11,** z.B. eines Hebels ändern.

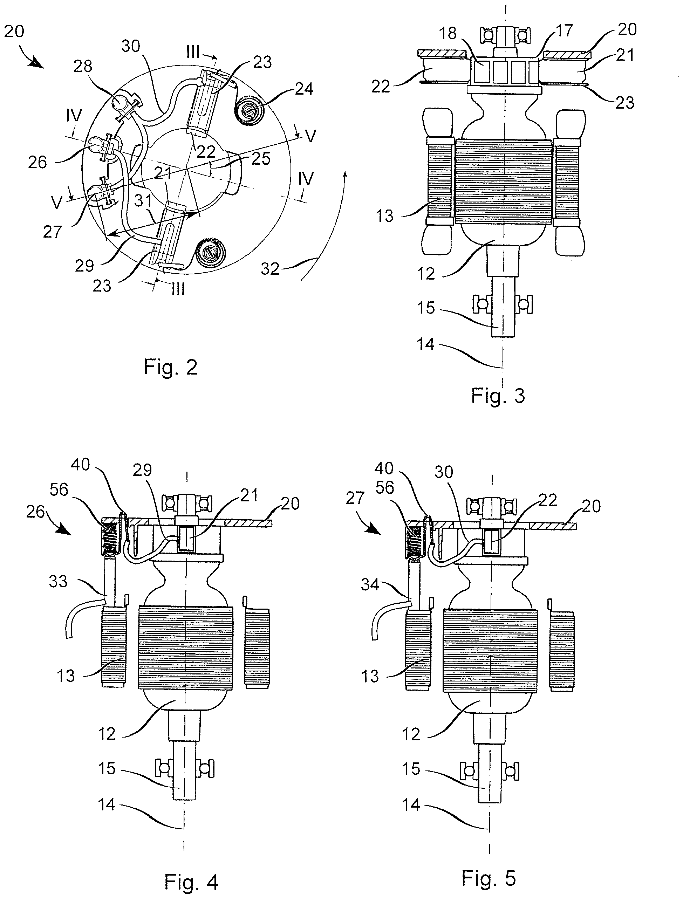

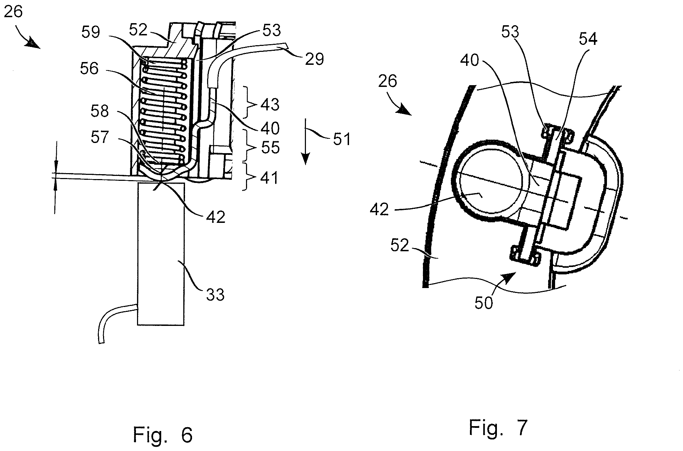

Fig. 3, 4 und 5 zeigen den Elektromotor **3** in einem Längsschnitt in den Ebenen III-III und IV-IV und V-V, welche in Fig. 2 angegeben sind. Detailansichten sind in Fig. 6 und Fig. 7 dargestellt. Der Elektromotor **3** hat einen Rotor **12,** der innerhalb eines Stators **13** um eine Motorachse **14** drehbar gelagert ist. Eine Welle **15** des Rotors **13** trägt mehrere Spulenwicklungen **16,** in die über einen an der Welle **15** befestigten Schleifring **17** Strom eingespeist werden kann. Der Schleifring **17** hat entlang seines Umfangs aufeinanderfolgend mehrere voneinander isolierte Kontaktabschnitte **18,** die mit den Spulenwicklungen **16** dauerhaft elektrisch verbunden sind, z.B. mittels Lötstellen, Klemmverbindungen.

Ein Bürstenhalter **20** kontaktiert den drehenden Schleifring **17.** Der beispielhafte Bürstenhalter **20** hat eine erste Kohlebürste **21** und eine zweite Kohlebürste **22,** die beide radial gegen die Kontaktabschnitte **18** des Schleifrings **17** vorgespannt sind, um jeweils einen elektrischen Kontakt zwischen den Kohlebürsten **21, 22** und den sich gegenüber den Kohlebürsten **21, 22** drehenden Kontaktabschnitte **18** zu gewährleisten. Die Kohlebürsten **21, 22** sind beispielsweise jeweils in einer Kohleführung **23** angeordnet, welche die Kohlebürsten **21, 22** radial führt. Die Vorspannung kann beispielsweise mittels einer Spiralfeder **24** erfolgen.

Der Bürstenhalter **20** ist mittels des Stellmechanismus **11** um die Motorachse **14** zwischen zwei Stellungen um einen Stellwinkel **25** verschwenkbar. Ein Einspeisen von Strom in die Kohlebürsten **21, 22** erfolgt über drei Anschlusskontakte **26, 27, 28** auf dem Bürstenhalter **20.** Die erste Kohlebürste **21** ist nur mit dem ersten Anschlusskontakt **26** elektrisch verbunden, z.B. mit einer Litze **29.** Die zweite Kohlebürste **22** ist sowohl mit dem zweiten Anschlusskontakt **27** und dem dritten Anschlusskontakt **28** verbunden, z.B. weiteren Litzen **30.** Die drei Anschlusskontakte **26, 27, 28** sind vorzugsweise in gleichem radialen Abstand **31** zu der Motorachse **14** angeordnet. Der erste Anschlusskontakt **26** ist in Umfangsrichtung **32** um die Motorachse **14** zwischen dem zweiten Anschlusskontakt **27** und dem dritten Anschlusskontakt **28** und um den Stellwinkel **25** zu dem zweiten Anschlusskontakt **27** und dem dritten Anschlusskontakt **28** versetzt angeordnet.

Der Elektromotor **4** hat zwei gegenüber dem Stator **12** und Maschinengehäuse **7** ortsfeste Einspeisekontakte **33, 34,** über welche Strom in die Anschlusskontakte **26, 27, 28** einspeisbar ist. Die Einspeisekontakte **33, 34** sind mit der Stromversorgung des Bohrhammers **1** dauerhaft elektrisch und mechanisch verbunden. Die beiden Einspeisekontakte **33, 34** sind in gleichem radialen Abstand **31** zu der Motorachse **14** wie die Anschlusskontakte **26, 27, 28** und um den Stellwinkel **25** um die Motorachse **14** zueinander versetzt angeordnet. In einer ersten Schwenkstellung der Bürstenplatte **20** berührt der zweite Anschlusskontakt **27** den ersten Einspeisekontakt **33** und der erste Anschlusskontakt **26** den zweiten Einspeisekontakt **34** (Fig. 4). In einer zweiten Schwenkstellung der Bürstenplatte **20** berührt der erste Anschlusskontakt **26** den ersten Einspeisekontakt **33** und der dritte Anschlusskontakt **28** den zweiten Einspeisekontakt **34.** Durch Verschwenken des Bürstenhalters **20** um den Stellwinkel **25** wird eine Stromflussrichtung durch den Elektromotor **4** umgekehrt.

Ein Aufbau der drei Anschlusskontakte **26, 27, 28** ist vorzugsweise gleich, weshalb nachfolgend beispielhaft der ersten Anschlusskontakt **26** beschrieben ist, welcher in der dargestellten Stellung des Bürstenhalters **20** den ersten Einspeisekontakt **33** kontaktiert.

Der Anschlusskontakt **26** hat einen Metallstreifen **40,** der in einem ersten Abschnitt **41** eine Kontaktfläche **42** zum Kontaktieren des Einspeisekontakts **33** aufweist. Ein zweiter Abschnitt **43** des Metallstreifens **40** ist mit der Litze **29** dauerhaft elektrisch und mechanisch verbunden, z.B. angelötet, angeschweißt, geklemmt. Die Litze **29** ist dauerhaft mit der ersten Kohlebürste **21** elektrisch verbunden. Ein elektrischer Strom fließt durch den Einspeisekontakt **33,** über die Kontaktfläche **42** in den Metallstreifen **40,** aus dem zweiten Abschnitt **43** über die Litze **29** in die erste Kohlebürste **21.** Der elektrische Kontakt zwischen dem Einspeisekontakt **33** und der Kontaktfläche **42** kann durch Schwenken des Bürstenhalters **20** geöffnet und geschlossen werden, die weiteren elektrischen Verbindungen sind in dem Sinn dauerhaft, dass nur zerstörende oder die Handwerkzeugmaschine **1** verändernde Eingriffe die elektrischen Verbindungen unterbrechen können.

Der Metallstreifen **40** ist in einem Gleitlager **50** längs einer Führungsrichtung **51** geführt. Die Führungsrichtung **51** ist vorzugsweise parallel zu einer Richtung von dem Anschlusskontakt **26** zu dem Einspeisekontakt **33,** z.B. parallel zu der Motorachse **14.** Das Gleitlager **50** hat beispielsweise einen Grundkörper **52,** in welchen Längsnuten **53** parallel zu der Führungsrichtung **51** eingebracht sind. Längskanten **54** eines dritten Abschnitts **55** des Metallstreifens **40** greifen in die Längsnuten **53** ein. Der Metallstreifen **40** kann geführt durch die Längsnuten **53** in Richtung zu dem Einspeisekontakt **33** bewegt werden. Der dritte Abschnitt **55** ist vorzugsweise zu dem ersten Abschnitt **41** angewinkelt, z.B. senkrecht orientiert. Der dritte Abschnitt **55** kann zwischen dem ersten Abschnitt **41** und dem zweiten Abschnitt **43** angeordnet sein, und ist von einem elektrischen Strom durchflossen.

Der Anschlusskontakt **26** hat eine zu dem Metallstreifen **40** separate Feder **56.** Die Feder **56** liegt an einer der Kontaktfläche **42** gegenüberliegenden Seite **57** des ersten Abschnitts **41** an. Die Feder **56** ist gegen den ersten Abschnitt **41** des Metallstreifens **40** vorgespannt und drückt den Metallstreifen **40** in Führungsrichtung **51** an den Einspeisekontakt **33.** Die Feder **56** ist vorzugsweise aus einem Federstahl. Ein erstes Ende **58** der Feder **56** kann den Metallstreifen **40** berühren. Ein zweites Ende **59** der Feder **56** ist vorzugsweise auf einem isolierenden Teil des Bürstenträgers **20,** z.B. dem Grundkörper **52** aus Kunststoff abgestützt. Die Feder **56** ist dadurch stromfrei, d.h. es fließt kein elektrischer Strom längs der Feder **56** von dem ersten Ende **58** zu dem zweiten Ende **59.**

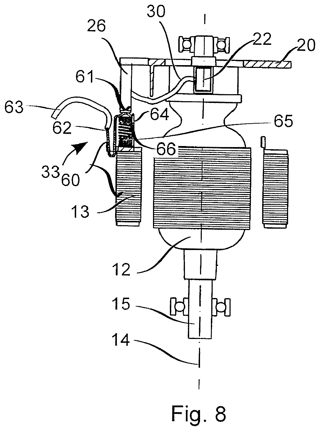

Eine weitere Ausgestaltung sieht vor, den ortsfesten Einspeisekontakt **33** mit einem beweglichen Metallband **60** zu versehen (Fig. 8). Eine Kontaktfläche **61** des Metallbands **60** kann den Anschlusskontakt **26** des Bürstenhalters **20** berühren und elektrisch kontaktieren. An dem Metallband **60** ist eine Anschlussfahne **62** vorgesehen, an welche eine Litze **63** dauerhaft angeschlossen ist, z.B. angelötet, angeschweißt, angeklemmt. Die Litze **63** ist mit der Stromversorgung **10** mittelbar oder unmittelbar verbunden. Das Metallband **60** ist in eine Führung **64** eingesetzt, welche eine Bewegung des Metallbands **60** auf eine lineare Bewegung längs einer Richtung zu dem Anschlusskontakt **26,** z.B. parallel zu der Motorachse **14,** beschränkt. Eine separate Feder **65** ist gegen eine der Kontaktfläche **61** gegenüberliegende Seite **66** des Metallbands **60** vorgespannt. Aufgrund der Feder **65** wird das Metallband **60** gegen den Anschlusskontakt **26** gepresst. In einer Ausgestaltung sind die Einspeisekontakte und die Anschlusskontakte mit einem durch eine Feder vorgespannt und längs eine Richtung geführtem Metallband versehen.

## Patentansprüche

1. Handwerkzeugmaschine mit
einem Maschinengehäuse **(7),**
einem Elektromotor **(3),** der einen um eine Motorachse verschwenkbaren Bürstenhalter aufweist,
einem Umpolschalter, der gegenüber dem Maschinengehäuse unbewegliche erste Kontakteinrichtungen **(33, 34)** und auf dem Bürstenhalter **(20)** angeordnete zweite Kontakteinrichtungen **(26, 27, 28)** beinhaltet,
einem Bedienelement **(11),** das durch einen Anwender zwischen zwei Stellung verstellbar, den Bürstenhalter **(20)** zum Wechseln einer Laufrichtung des Elektromotors **(3)** verschwenkt,
**dadurch gekennzeichnet, dass**
wenigstens eine der ersten Kontakteinrichtungen **(33, 34)** ein erstes Metallband **(60)** und eine erste Feder **(65)** aufweist, wobei ein Abschnitt des ersten Metallbandes **(60)** auf einer Seite eine erste Kontaktfläche **(61)** zum Kontaktieren einer der zweiten Kontakteinrichtung **(26, 27, 28)** aufweist und die erste Feder (**61**) gegen eine der ersten Kontaktfläche **(61)** gegenüberliegende Seite **(66)** des Abschnitts des ersten Metallbandes **(60)** in Richtung zu der zweiten Kontakteinrichtung **(26, 27, 28)** vorgespannt ist und/oder
wenigstens eine der zweiten Kontakteinrichtungen **(26, 27, 28)** ein zweites Metallband **(40)** und eine zweite Feder **(56)** aufweist, wobei ein Abschnitt **(41)** des zweiten Metallbandes **(40)** auf einer Seite eine zweite Kontaktfläche **(42)** zum Kontaktieren einer der ersten Kontakteinrichtung **(33, 34)** aufweist und die zweite Feder **(56)** gegen eine der zweiten Kontaktfläche **(42)** gegenüberliegende Seite **(67)** des Abschnitts **(41)** des zweiten Metallbandes **(68)** in Richtung zu der einen ersten Kontakteinrichtung **(33, 34)** vorgespannt ist.

2. Handwerkzeugmaschine nach Anspruch 1, **dadurch gekennzeichnet, dass** ein anderer Abschnitt des zweiten Metallbands **(40)** dauerhaft mit einer Bürsteneinrichtung **(20)** auf dem Bürstenhalter **(20)** verbunden ist.

3. Handwerkzeugmaschine nach Anspruch 1, **dadurch gekennzeichnet, dass** ein anderer Abschnitt des ersten Metallbands dauerhaft mit einer Stromversorgung **(10)** der Handwerkzeugmaschine **(1)** verbunden ist.

4. Handwerkzeugmaschine nach Anspruch 2 oder 3, **dadurch gekennzeichnet, dass** eine Litze auf den anderen Abschnitt des ersten Metallbands und/oder den anderen Abschnitt des zweiten Metallbands aufgelötet, aufgeschweißt oder angeklemmt ist.

5. Handwerkzeugmaschine nach einem der vorhergehenden Ansprüche, **dadurch gekennzeichnet, dass** die erste Feder und/oder die zweite Feder stromfrei sind.

6. Handwerkzeugmaschine nach Anspruch 5, **dadurch gekennzeichnet, dass** die erste Feder zwischen die die der ersten Kontaktfläche gegenüberliegende Seite des ersten Metallbandes und einen ersten elektrisch isolierenden Träger eingespannt ist und/oder die zweite Feder zwischen die die der zweiten Kontaktfläche gegenüberliegende Seite des zweiten Metallbandes und einen zweiten elektrisch isolierenden Träger eingespannt ist.

7. Handwerkzeugmaschine nach einem der vorhergehenden Ansprüche, **dadurch gekennzeichnet, dass** das erste Metallband in einer ersten Gleitführung parallel zu der Richtung zu der zweiten Kontakteinrichtung geführt ist und/oder das zweite Metallband in einer zweiten Gleitführung parallel zu der Richtung zu der ersten Kontakteinrichtung geführt ist.

8. Handwerkzeugmaschine nach Anspruch 7, dass ein in der ersten Gleitführung angeordneter Abschnitt des ersten Metallbandes zu dem Abschnitt mit der ersten Kontaktfläche angewinkelt ist und/oder
ein in der zweiten Gleitführung angeordneter Abschnitt des zweiten Metallbandes zu dem Abschnitt mit der zweiten Kontaktfläche angewinkelt ist.

9. Handwerkzeugmaschine nach Anspruch 7, **dadurch gekennzeichnet, dass** das erste Metallband zwischen dem Abschnitt mit der ersten Kontaktfläche und einem Abschnitt, an dem eine Litze aufgelötet, aufgeschweißt oder angeklemmt ist, und einen weiteren Abschnitt aufweist, der in der ersten Gleitführung angeordnet ist, und/oder das zweite Metallband zwischen dem Abschnitt mit der zweiten Kontaktfläche und einem Abschnitt, an dem eine Litze aufgelötet, aufgeschweißt oder angeklemmt ist, und einen weiteren Abschnitt aufweist, der in der zweiten Gleitführung angeordnet ist.
